# EUROPÄISCHE PATENTANMELDUNG

(11) **EP 4 628 774 A1**
(43) Veröffentlichungstag der Anmeldung: **08.10.2025**
(21) Anmeldenummer: 25166064.3
(22) Anmeldetag: 25.03.2025
(51) Int. Cl.: F16L 33/22

(54) **ANSCHLUSSVORRICHTUNG FÜR EIN KUNSTSTOFFROHR**

(30) Priorität: 03.04.2024 AT 5004324 U
(71) Anmelder: KE KELIT GmbH, 4020 Linz (AT)
(72) Erfinder: Ratschmann, Elmar, 4202 Hellmonsödt (AT)
(74) Vertreter: Hübscher & Partner Patentanwälte GmbH

(57) **Zusammenfassung**

Es wird eine Anschlussvorrichtung für ein Kunststoffrohr (3) an einem Anschlussnippel (1) beschrieben, wobei das Anschlussende (4) des Kunststoffrohrs (3) zwischen dem Anschlussnippel (1) und einer Klemmhülse (2) axial festgehalten ist, die im Bereich der Stirnseite (9) des auf den Anschlussnippel (1) aufgeschobenen Anschlussendes (4) des Kunststoffrohrs (3) wenigstens eine Öffnung (8) bildet, durch die ein radial einwärts vorstehender, über die Stirnseite (9) des Anschlussendes (4) des Kunststoffrohrs (3) radial nach außen verlagerbarer Anschlag (7) ragt, wobei der Anschlag (7) einteilig mit der Klemmhülse (2) ausgebildet ist und über eine Sollbruchstelle (12) innerhalb der Öffnung (8) in einer Anschlaglage gehalten ist. Um eine saubere Einschubkontrolle zu ermöglichen, bricht die Sollbruchstelle (12) bei einer Verlagerung des Anschlags (7) radial nach außen akustisch eindeutig wahrnehmbar wozu der der Anschlag (7) mit der Klemmhülse (2) vorzugsweise aus einem Kunststoff mit einem E-Modul von größer 1000MPa bei einer Streckgrenze von kleiner 8% besteht.

## Beschreibung

Die Erfindung bezieht sich auf eine Anschlussvorrichtung für ein Kunststoffrohr an einem Anschlussnippel, wobei das Anschlussende des Kunststoffrohrs zwischen dem Anschlussnippel und einer Hülse axial festgehalten ist, die im Bereich der Stirnseite des auf den Anschlussnippel aufgeschobenen Anschlussendes des Kunststoffrohrs wenigstens eine Öffnung bildet, durch die ein radial einwärts vorstehender, über die Stirnseite des Anschlussendes des Kunststoffrohrs radial nach außen verlagerbarer Anschlag ragt, wobei der Anschlag einteilig mit der Hülse ausgebildet ist und über eine Sollbruchstelle innerhalb der Öffnung in einer Anschlaglage gehalten ist.

Eine derartige Anschlussvorrichtung wurde bereits vorgeschlagen (AT 507 566 A4), um unter Einsatz vergleichsweise einfacher Konstruktionsmittel auch im Nachhinein überprüfen zu können, ob das Anschlussende des Kunststoffrohrs ursprünglich ordnungsgemäß in die Hülse eingeführt worden ist, wurde.

Damit mit einem Druckmedium beaufschlagbare Kunststoffrohre, beispielsweise für Wasserleitungen von Hausinstallationen, an eine Armatur angeschlossen werden können, ist es bekannt (AT 507 533 A1), das Anschlussende der Kunststoffrohre auf einen mit einer Profilierung versehenen Anschlussnippel der Armatur aufzuschieben und zwischen dem Anschlussnippel und einer Hülse festzuklemmen, wobei die Abdichtung durch wenigstens einen in eine Umfangsnut des Anschlussnippels eingesetzten Dichtungsring sichergestellt wird. Die Klemmung des Kunststoffrohrs und damit der Abzugswiderstand hängen dabei von der Eingriffslänge des Anschlussendes des Kunststoffrohrs im Ringspalt zwischen Anschlussnippel und Hülse ab, sodass es für eine ordnungsgemäße Klemmung des Kunststoffrohrs erforderlich ist, dessen Anschlussende ausreichend weit auf den Anschlussnippel aufzuschieben. Zur Kontrolle der Aufschublänge ist, im Bereich der Stirnseite des auf den Anschlussnippel aufgeschobenen Anschlussendes des Kunststoffrohrs in der Hülse eine Sichtöffnung vorzusehen, sodass durch die Sichtöffnung erkannt werden kann, ob das Anschlussende des Kunststoffrohrs ausreichend weit in die Hülse eingreift.

Darüber hinaus wurde bereits vorgeschlagen (EP 0 940 620 A1, EP 1 559 943 A1), die Hülse mit einem Einsatz zu versehen, der wenigstens einen radial einwärts vorstehenden, mit der Stirnseite des Anschlussendes des Kunststoffrohrs zusammenwirkenden Anschlag aufweist, sodass beim Einschieben des Kunststoffrohrs zwischen dem Anschlussnippel und der Hülse der Anschlag über das eingeschobene Kunststoffrohr radial nach außen durch eine entsprechende Öffnung der Hülse verlagert wird und dann eine sichtbare Anzeige für das ordnungsgemäße Aufschieben des Kunststoffrohrs auf den Anschlussnippel darstellt. Nachteilig bei dieser bekannten Konstruktion ist allerdings, dass ein zusätzlicher Einsatz erforderlich wird und dass nach einem Abziehen des Kunststoffrohrs vom Anschlussnippel nicht mehr festgestellt werden kann, ob das Kunststoffrohr ordnungsgemäß auf dem Anschlussnippel aufgeschoben worden war.

Mit den bekannten Vorrichtungen ist es zwar möglich optisch festzustellen, ob das Anschlussende des Kunststoffrohrs ausreichend weit in die Hülse eingreift, allerdings ergeben sich in der Praxis des Öfteren Montage- und Einbausituationen, in denen keine freie Sicht auf die Öffnung möglich ist.

Der Erfindung liegt somit die Aufgabe zugrunde, eine Anschlussvorrichtung der eingangs geschilderten Art zu schaffen, die es auch für den Fall, dass es optisch nicht feststellbar ist, ob das Anschlussende des Kunststoffrohrs ausreichend weit in die Hülse eingreift oder nicht, eine derartige Kontrolle ermöglicht.

Die Erfindung löst die gestellte Aufgabe dadurch, dass die Sollbruchstelle bei einer Verlagerung des Anschlags radial nach außen akustisch eindeutig wahrnehmbar bricht. Dazu kann der Anschlag mit der Hülse insbesondere aus einem Kunststoff, hierunter fällt auch ein Kunststoffverbund, mit einem E-Modul von größer 1000MPa bei einer Streckgrenze von kleiner 8% bestehen. Damit ist ein sauberes Brechen der Sollbruchstelle unter Abgabe eines eindeutigen Bruchlautes sichergestellt. Dieser Bruchlaut kann beim Einschieben des Anschlussendes des Kunststoffrohrs in die Hülse eindeutig und sauber wahrgenommen werden, womit ein akustisches Bestätigungssignal für das Vorliegen einer ordnungsgemäßen Verbindung gegeben ist. Das Brechen der Sollbruchstellen dient somit als akustisch eindeutig wahrnehmbarer Einschubindikator.

Vorzugsweise besteht der Anschlag mit der Hülse aus einem Kunststoff mit einem E-Modul von größer 2200MPa bei einer Streckgrenze von kleiner 7,4%.

Der Anschlag mit der Hülse kann aus Polyphenylsulfon (PPSU) mit einem E-Modul von wenigstens 2.200MPa, insbesondere von wenigstens 2.300MPa, und einer Streckgrenze von maximal 7,4%, insbesondere von maximal 7,2% bestehen.

Der Anschlag mit der Hülse kann aus Polysulfon (PSU) mit einem E-Modul von wenigstens 2.380MPa, insbesondere von wenigstens 2.480MPa und einer Streckgrenze von maximal 5,6%, insbesondere von maximal 5,3% bestehen.

Der Anschlag mit der Hülse kann aus Polyethylenterephtalat (PET) mit einem E-Modul wenigstens 2.700MPa, insbesondere von wenigstens von 2.800MPa und einer Streckgrenze von maximal 5,7%, insbesondere von maximal 5,4% bestehen.

Der Anschlag mit der Hülse kann aus Polycarbonat (PC) mit einem E-Modul von wenigstens 2.100MPa, insbesondere von wenigstens 2.200MPa und einer Streckgrenze von maximal 7,1%, insbesondere von maximal 6,8% bestehen.

Sehr gute Ergebnisse lassen sich insbesondere erzielen, wenn der Anschlag mit der Hülse aus einem transparenten Polyamid aus sowohl aliphatischen als auch cycloaliphatischen Wiederholeinheiten (Copolyamid, insbesondere ein partiell aromatisches Polyamid wie zB Grilamid TR od. dgl.) mit einem E-Modul von wenigstens 1.600MPa, insbesondere von wenigstens 2.800MPa und einer Streckgrenze von maximal 6,3%, insbesondere von maximal 6% besteht. In einer bevorzugten Ausführungsform werden die Werkstoff Grilamit TR30 oder TR 90 E verwendet.

Der radial nach außen verlagerbare Anschlag ist vorzugsweise über drei Anschlussstellen mit der Hülse verbunden, von welchen wenigstens eine die Sollbruchstelle bildet. Damit kann sichergestellt werden, dass der ordnungsgemäß ausgelöste Anschlag an der Hülse verbleibt und nicht unkontrolliert abfällt. Dazu können zwei der Anschlusstellen unter Ausbildung eines Drehscharnieres in Hülsenumfangsrichung in einer gemeinsamen Hülsenquerschnittsebene liegen.

Der E-Modul, auch Elastizitätsmodul, Zugmodul, Elastizitätskoeffizient, Dehnungsmodul oder Youngscher Modul, ist ein Materialkennwert aus der Werkstofftechnik. Der E-Modul bezeichnet den Steifigkeitsfaktor eines Kunststoffes, als im ideal-elastischen Anfangsbereich seiner Spannungs-Dehnungskurve und wird in N/mm2 oder MPa (1N/mm2 = 1 MPa) ausgedrückt. Der Betrag des E-Moduls ist umso größer, je mehr Widerstand ein Werkstoff seiner Verformung entgegensetzt und er ist ein Maß für den proportionalen Zusammenhang zwischen Spannung und Dehnung bei der Verformung eines festen Körpers, insbesondere eines in einschlägigen Normen definierten Probenkörpers.

Die Streckgrenze ist eine Werkstoffkenngröße und bezeichnet diejenige mechanische Spannung, bis zu der ein Werkstoff elastisch verformbar ist. Die Streckgrenze bezeichnet den Spezialfall der Elastizitätsgrenze bei einachsiger und momentenfreier Zugbeanspruchung. Unterhalb seiner Streckgrenze kehrt das Material nach Entlastung elastisch in seine ursprüngliche Form zurück, bei Überschreiten der Streckgrenze verbleibt eine plastische Formveränderung, bei einer Zugprobe also eine Dehnung.

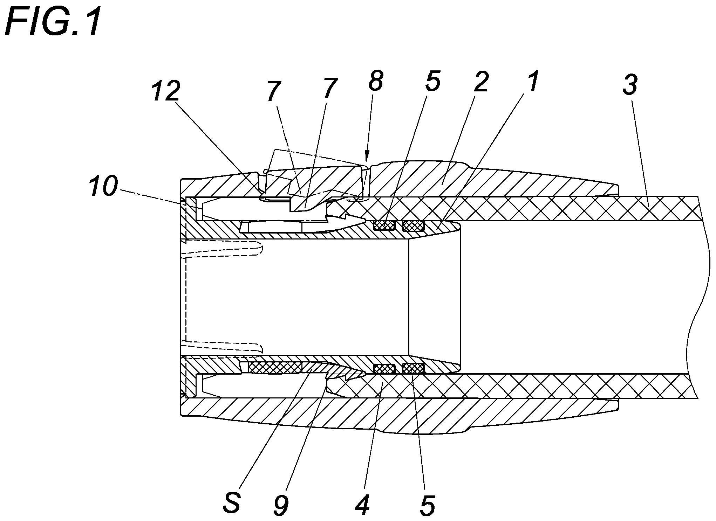

In der Zeichnung ist der Erfindungsgegenstand beispielsweise dargestellt. Es zeigen
- Fig. 1: eine erfindungsgemäße Anschlussvorrichtung für ein Kunststoffrohr an einem Anschlussnippel in einem vereinfachten Längsschnitt und

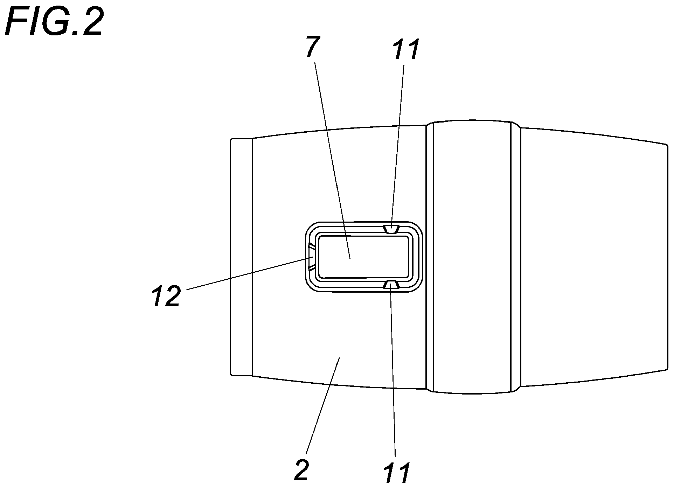

- Fig. 2: eine Ansicht auf die Hülse mit dem über drei Anschlussstellen mit der Hülse verbundenen Anschlag.

Die Anschlussvorrichtung gemäß dem dargestellten Ausführungsbeispiel weist einen Anschlussnippel 1 einer nicht näher dargestellten Armatur sowie eine mit dem Anschlussnippel 1 verbundene Hülse 2 auf, zwischen der und dem profilierten Anschlussnippel 1 ein Kunststoffrohr 3 festgeklemmt wird, dessen Anschlussende 4 in den Ringspalt zwischen Anschlussnippel 1 und Hülse 2 vor dem Klemmen eingeführt wird. Die eigentliche Klemmverbindung wird dann beispielsweise über einen am Anschlussnippel 1 angeordneten Spreizring S sichergestellt, wie er aus der AT508668A4 bekannt ist. Die Dichtung zwischen dem Anschlussnippel 1 und dem Kunststoffrohr 3 wird durch einen Dichtungsring 5 erreicht, der in eine Umfangsnut 6 des Anschlussnippels 1 eingesetzt ist.

Da die Klemmverbindung von der Eingriffslänge des Anschlussendes 4 des Kunststoffrohrs 3 in den Ringspalt zwischen Anschlussnippel 1 und Hülse 2 abhängt, ist das Anschlussende 4 entsprechend weit auf den profilierten Anschlussnippel 1 aufzuschieben. Damit die Eingriffslage des Anschlussendes 4 des Kunststoffrohrs 3 überwacht werden kann, ist die Hülse 2 mit wenigstens einem radial einwärts vorstehenden Anschlag 7 versehen, der in einer Öffnung 8 der Kunststoffhülse 2 gelagert ist und durch die Öffnung 8 über die Stirnseite 9 des Anschlussendes 4 des Kunststoffrohrs 3 nach außen verlagert werden kann, wenn das Anschlussende 4 bis zur strichpunktiert angedeuteten Anschlussstellung 10 in die Hülse 2 eingeschoben wird. Gemäß dem dargestellten Ausführungsbeispiel ist der Anschlag 7 über zwei Drehscharniere 11, nämlich die beiden in Hülsenumfangsrichung in einer gemeinsamen Hülsenquerschnittsebene liegenden Anschlussstellen zwischen Hülse 2 und Anschlag 7, mit dem Rand der Öffnung 8 in der Hülse 2 verbunden und durch die Sollbruchstelle 12 in der in vollen Linien dargestellten Anschlagstellung gehalten. Stößt beim Einschieben des Anschlussendes 4 des Kunststoffrohrs 3 in die Hülse 2 die Stirnseite 9 an den Anschlag 7 an, so wird über die Stirnseite 9 des Kunststoffrohrs 3 auf den Anschlag 7 ein Drehmoment ausgeübt, das bei einer entsprechenden axialen Belastung des Kunststoffrohrs 3 die Sollbruchstelle 12 akustisch eindeutig wahrnehmbar löst, sodass der Anschlag 7 durch die Öffnung 8 nach außen gebogen werden kann, wie dies strichpunktiert angedeutet ist. Auch das Filmscharnier 11 kann brechen. Das Anschlussende 4 der Kunststoffhülse 2 kann somit unbehindert in die Anschlussstellung 10 vorgeschoben werden, bevor das Kunststoffrohr 3 zwischen dem Anschlussnippel 1 und der Kunststoffhülse 2 festgeklemmt wird. Der radial über die Hülse 2 vorstehende Anschlag 7 zeigt dann an, dass das Anschlussende 4 des Kunststoffrohrs 3 ordnungsgemäß in die Anschlussstellung 10 vorgeschoben wurde, wobei auch nach einem fehlerhaften Ausziehen des Kunststoffrohrs 3 aus der Hülse 2 festgestellt werden kann, ob ursprünglich die Anschlussstellung 10 erreicht worden ist.

## Patentansprüche

1. Anschlussvorrichtung für ein Kunststoffrohr (3) an einem Anschlussnippel (1), wobei das Anschlussende (4) des Kunststoffrohrs (3) zwischen dem Anschlussnippel (1) und einer Hülse (2) axial festgehalten ist, die im Bereich der Stirnseite (9) des auf den Anschlussnippel (1) aufgeschobenen Anschlussendes (4) des Kunststoffrohrs (3) wenigstens eine Öffnung (8) bildet, durch die ein radial einwärts vorstehender, über die Stirnseite (9) des Anschlussendes (4) des Kunststoffrohrs (3) radial nach außen verlagerbarer Anschlag (7) ragt, wobei der Anschlag (7) einteilig mit der Hülse (2) ausgebildet ist und über eine Sollbruchstelle (12) innerhalb der Öffnung (8) in einer Anschlaglage gehalten ist, **dadurch gekennzeichnet, dass** die Sollbruchstelle (12) bei einer Verlagerung des Anschlags (7) radial nach außen akustisch eindeutig wahrnehmbar bricht.

2. Anschlussvorrichtung nach Anspruch 1, **dadurch gekennzeichnet, dass** der Anschlag (7) mit der Hülse (2) aus einem Kunststoff mit einem E-Modul von größer 1000MPa bei einer Streckgrenze von kleiner 8% besteht.

3. Anschlussvorrichtung nach Anspruch 1, **dadurch gekennzeichnet, dass** der Anschlag (7) mit der Hülse (2) aus einem Kunststoff mit einem E-Modul von größer 2200MPa bei einer Streckgrenze von kleiner 7,4% besteht.

4. Anschlussvorrichtung nach einem der Ansprüche 1 bis 3, **dadurch gekennzeichnet, dass** der Anschlag (7) mit der Hülse (2) aus Polyphenylsulfon (PPSU) mit einem E-Modul von wenigstens 2.200MPa, insbesondere von wenigstens 2.300MPa, und einer Streckgrenze von maximal 7,4%, insbesondere von maximal 7,2% besteht.

5. Anschlussvorrichtung nach einem der Ansprüche 1 bis 3, **dadurch gekennzeichnet, dass** der Anschlag (7) mit der Hülse (2) aus Polysulfon (PSU) mit einem E-Modul von wenigstens 2.380MPa, insbesondere von wenigstens 2.480MPa und einer Streckgrenze von maximal 5,6%, insbesondere von maximal 5,3% besteht.

6. Anschlussvorrichtung nach einem der Ansprüche 1 bis 3, **dadurch gekennzeichnet, dass** der Anschlag (7) mit der Hülse (2) aus Polyethylenterephtalat (PET) mit einem E-Modul wenigstens 2.700MPa, insbesondere von wenigstens von 2.800MPa und einer Streckgrenze von maximal 5,7%, insbesondere von maximal 5,4% besteht.

7. Anschlussvorrichtung nach einem der Ansprüche 1 bis 3, **dadurch gekennzeichnet, dass** der Anschlag (7) mit der Hülse (2) aus Polycarbonat (PC) mit einem E-Modul von wenigstens 2.100MPa, insbesondere von wenigstens 2.200MPa und einer Streckgrenze von maximal 7,1%, insbesondere von maximal 6,8% besteht.

8. Anschlussvorrichtung nach einem der Ansprüche 1 bis 3, **dadurch gekennzeichnet, dass** der Anschlag (7) mit der Hülse (2) aus einem transparenten Polyamid aus sowohl aliphatischen als auch cycloaliphatischen Wiederholeinheiten mit einem E-Modul von wenigstens 1.600MPa, insbesondere von wenigstens 2.800MPa und einer Streckgrenze von maximal 6,3%, insbesondere von maximal 6% besteht.

9. Anschlussvorrichtung nach einem der Ansprüche 1 bis 8, **dadurch gekennzeichnet, dass** der radial nach außen verlagerbare Anschlag (7) über drei Anschlussstellen mit der Hülse (2) verbunden ist, von welchen wenigstens eine die Sollbruchstelle (12) bildet.

10. Anschlussvorrichtung nach Anspruch 9, **dadurch gekennzeichnet, dass** zwei der Anschlusstellen unter Ausbildung eines Drehscharniere (11) in Hülsenumfangsrichtung in einer gemeinsamen Hülsenquerschnittsebene liegen.
